# EUROPÄISCHE PATENTSCHRIFT

(11) **EP 1 713 640 B1**
(45) Veröffentlichungstag und Bekanntmachung des Hinweises auf die Patenterteilung: **16.03.2011**
(21) Anmeldenummer: 05706699.5
(22) Anmeldetag: 26.01.2005
(51) Int. Cl.: B32B 37/12, B32B 38/10, B42D 15/10

(54) **SICHERHEITSELEMENT MIT PARTIELLER MAGNETSCHICHT**
SECURITY ELEMENT COMPRISING A PARTIAL MAGNETIC LAYER
ELEMENT DE SECURITE A COUCHE MAGNETIQUE PARTIELLE

(30) Priorität: 30.01.2004 DE 102004004713
(43) Veröffentlichungstag der Anmeldung: 25.10.2006
(73) Patentinhaber: Leonhard Kurz Stiftung & Co. KG, 90763 Fürth (DE)
(72) Erfinder: BREHM, Ludwig, 91325 Adelsdorf (DE)
(74) Vertreter: Zinsinger, Norbert
(86) Internationale Anmeldenummer: PCT/DE2005/000103
(87) Internationale Veröffentlichungsnummer: WO 2005/072963

(56) Entgegenhaltungen:
- EP-A- 0 945 280
- WO-A-03/054259
- DE-A1- 4 307 487
- GB-A- 2 325 883
- US-A- 5 509 691

## Beschreibung

Die Erfindung betrifft ein Sicherheitselement, insbesondere einen Sicherheitsfaden für Wertdokumente wie Banknoten, Kreditkarten, Ausweise oder Tickets, das mindestens eine partielle Magnetschicht zur Speicherung einer codierten Information aufweist und ein Verfahren zur Herstellung desselben.

Magnetschichten zur Speicherung von Informationen können weichmagnetisch, hartmagnetisch oder paramagnetisch ausgebildet sein. Um eine hohe Datensicherheit zu erhalten, ist es erforderlich, die Strukturierung der Magnetschicht mit hoher Auflösung und Registergenauigkeit durchzuführen.

Die Magnetschicht kann mit magnetischen Partikeln, bevorzugt Eisenoxid-Pigmenten, wie in der DE-PS 697 02 321 T2 beschrieben oder als amorphes Metallglas, wie in der US-PS 4 960 651 beschrieben, ausgebildet sein.

In der DE-PS 695 05 539 T2 wird vorgeschlagen, ein magnetisches Metall auf einem vorbehandelten elastischen Substrat aus einer Lösung abzuscheiden, wobei als magnetisches Metall Kobalt mit oder ohne Nickel, Eisen und/oder Phosphor vorgesehen sind.

Häufig sind derartige Folien mit metallischen Schichten zur Ausbildung von reflektiven optischen Sicherheitselementen, beispielsweise Interferenzschichtsystemen oder Beugungsgittern versehen. Eisenoxid-Pigmente führen jedoch auf mit Aluminium ausgebildeten Schichten zur Korrosion des Aluminiums. Vermutlich sind diese Korrosionsschäden darauf zurückzuführen, daß die Eisenoxid-Pigmente als Protonen-Donatoren wirken, wobei auch eine Rolle spielt, daß die Eisenoxid-Pigmente pH-Werte in einem Bereich zwischen 3,0 und 5,5 aufweisen. Deshalb wird beispielsweise in der DE 42 12 290 C1 vorgeschlagen, daß die Metallschicht von Chrom, Kupfer, Silber oder Gold oder Legierungen aus wenigstens zwei dieser Metalle gebildet ist und/oder zwischen der Metallschicht und der Magnetschicht eine Einwirkung der magnetisierbaren Teilchen auf die Metallschicht verhindernde Barriere angeordnet ist.

Weiter wird von der EP 0 945 280 A2 ein Verfahren zum Aufbringen einer pigmentierten oder metallischen Schicht auf ein Substrat beschrieben. Hierbei wird auf das Substrat eine Kleberschicht aufgebracht, die Kleberschicht vernetzt und dann das Substrat mit der Kleberschicht erwärmt, um die Kleberschicht klebrig zu machen. Anschließend wird die pigmentierte oder metallische Schicht aufgebracht.

Weiter wird in der GB 2 325 883 A ein Sicherheitsfaden mit einer Magnetschicht und einer musterförmig ausgeformten Schicht aus einem lumineszenten Material beschrieben.

Der Erfindung liegt nun die Aufgabe zugrunde, die Herstellung von Sicherheitselementen der genannten Art zu verbessern und den Aufbau verbesserter Sicherheitselemente anzugeben.

Diese Aufgabe wird durch ein Verfahren zur Herstellung eines Sicherheitselements nach Anspruch 1 sowie durch ein Sicherheitselement nach Anspruch 17 gelöst.

Durch die Erfindung ist es möglich, die magnetische Schicht in einem kontinuierlichen Verfahren auf das Sicherheitselement aufzubringen. Durch die Verwendung einer Transferfolie, d.h. durch die Abkehr von den bisherigen Druckverfahren zum Aufbringen einer partiellen Magnetschicht ist es mit dem neuartigen Fertigungsverfahren nunmehr möglich, magnetische Schichten in Sicherheitsfäden einzubringen, die so nicht realisierbar waren. Es ist nicht mehr notwendig, die magnetische Schicht aus einer magnetischen, in der Regel sauren Dispersion mit optimierten Druckeigenschaften einzusetzen, etwa um die erforderliche Auflösung und Dicke der aufzudruckenden Struktur der magnetischen Schicht zu erhalten. Es ist vielmehr möglich, Magnetschichten einzubringen, die mit einem Fertigungsverfahren hergestellt werden, das den ersten Folienkörper zerstören oder beschädigen würde. Weiter wirkt die Klebeschicht weiter als funktionelle Verkapselungsschicht und hat demnach eine Doppelfunktion, was zu weiteren Synergien führt.

Damit werden durch die Erfindung eine Vielzahl von Möglichkeiten eröffnet, Magnetschichten mit optimierten Eigenschaften, beispielsweise wesentlich erhöhte Magnetfeldstärke kombiniert mit dünnerer Schichtdicke, Einsatz von Magnetschichten, die keine korrodierenden Eigenschaften besitzen, oder Magnetschichten, die andersartige optische Eigenschaften besitzen, kostengünstig und mit hoher Auflösung in Sicherheitsfäden einzubringen.

Bevorzugt wird die Erfindung dazu verwendet, magnetische, detektierbare Bereiche unterschiedlicher Größe, beispielsweise von Strichstärken im Bereich von 0,3 mm bis 10 mm, registerhaltig zu diffraktiven, mit Aluminiumteilen metallisierten Bereichen aufzubringen. Durch die Erfindung ist es hierbei möglich, Materialien für die Magnetschicht zu verwenden, bei denen es zu keiner Korrosion zwischen der Magnetschicht und dem Aluminium kommt.

Weitere Vorteile ergeben sich bei der Herstellung von partiellen Magnetschicht-Bereichen mit dünner Strichstärke, die trotzdem die erforderlichen magnetischen Eigenschaften besitzen, die eine Detektion dieser Bereiche erlaubt. Derart dünne, detektierbare Strichstärken, beispielsweise Strichstärken im Bereich von 0,3 mm, können mit einem normalen Druckverfahren (Tiefdruck, Flexodruck, Gießen) nicht realisiert werden, da das erforderliche Lackvolumen nur mit entsprechenden tiefen Druckformen aufgebracht werden kann, die dabei zum Schmieren neigen. Vorzugsweise kann die Magnetschicht hierbei wie folgt beschrieben aufgebaut sein:
Die magnetische Schicht kann aus magnetischen Partikeln ausgebildet sein. Hierdurch kann beispielsweise die Flächendichte der magnetischen Partikel erhöht werden, beispielsweise indem die Partikel auf die Transferfolie gesputtert werden.
Eine derart aufgebaute Magnetschicht verfügt über eine Magnetfeldstärke, die bei gleicher Schichtdicke etwa um den Faktor 100 höher als eine vergleichbare, aus einer Magnetdispersion bestehenden Schicht, ist.

Es kann auch vorgesehen sein, die magnetische Schicht zu sputtern und beispielsweise als eine Legierung aus Eisen, Kobalt, Nickel, Molybdän und weiteren Elementen auszubilden, wobei vorgesehen sein kann, daß nicht alle genannten Elemente Legierungsbestandteil sind.

Es kann nunmehr auch vorgesehen sein, die magnetische Schicht als magnetisches Glas auszubilden. Derartige Legierungen sind beispielsweise in EP 0 953 937 A1 beschrieben. Vorzugsweise ist vorgesehen, die magnetische Schicht aus magnetischem Glas bzw. aus amorphem Metallglas auszubilden.

Dazu kann vorgesehen sein, amorphes Metallglas, d.h. eine amorphe, d.h. nicht kristalline Schicht aus Kobalt und/oder Eisen und/oder Chrom und/oder Nickel und/oder Silizium und/oder Bor durch Sputtern oder ein anderes geeignetes Verfahren auf die Trägerfolie aufzubringen. Dabei ist es möglich, die Eigenschaften der magnetischen Schicht durch die Auswahl und/oder das Mischungsverhältnis der genannten Komponenten einzustellen.

Weiter ist es auch möglich, dass die Magnetschicht aus einer Dispersion eines Magnetpigments (Fe-Oxid, Fe-Oxid dotiert) in einer organischen Bindemittel-Matrix besteht.

Die mit dem erfindungsgemässen Verfahren aufgebrachte magnetische Schicht induziert in einem magnetischen Lesekopf eine deutlich höheres Ausgangssignal, typischerweise ein um ein bis zwei Größenordnungen höheres Signal als mit nach dem Stand der Technik aufgedruckten magnetischen Schichten. Als weitere Vorteile sind die besonderen optischen Eigenschaften dieser Schichten und die hohe Qualität der mittels des erfindungsgemäßen Verfahrens in Sicherheitsfaden eingebrachten magnetischen Schicht hervorzuheben.

Weiter ist es möglich, die magnetischen Partikel als Nano-Partikel auszubilden.

Von Vorteil ist auch, daß die magnetische Schicht kostengünstig als Halbfabrikat herstellbar ist, wodurch die anteiligen Herstellungskosten pro Sicherheitselement deutlich reduziert sind, Der Herstellungsprozeß der erfindungsgemäßen Transferfolie muß nur einmal optimiert werden und bedarf keiner Schritte zur Strukturierung der magnetischen Schicht, wie beispielsweise aufwendiger Ätzprozesse.

Zur Positionierung der Transferfolie auf dem ersten Folienkörper müssen keine besonderen Vorkehrungen, wie Paßmarken o.ä. vorgenommen werden, weil jeder Abschnitt der erfindungsgemäßen Transferfolie gleich ausgebildet ist.

Dadurch, daß der Kleber als strahlungsvernetzbarer Kleber, vorzugsweise als UV-vernetzbarer Kleber ausgebildet ist, ist das Sicherheitselement bei dem erfindungsgemäßen Herstellungsverfahren keiner Wärmebeanspruchung ausgesetzt. Dadurch setzt bei der Ausbildung der magnetischen Schicht als Metallglas keine unerwünschte Kristallbildung ein, d.h. das Metallglas wird durch das erfindungsgemäße Verfahren nicht strukturell verändert.

Es kann vorgesehen sein, daß der Kleber elektrisch isolierend ausgebildet ist. Auf diese Weise sind Korrosionsschäden durch Lokalelementbildung an der metallischen Beschichtung unterbunden, die insbesondere dann beobachtet werden, wenn die magnetische Schicht aus Eisenoxid-Pigmenten ausgebildet ist und die metallische Beschichtung aus Aluminium ausgebildet ist. Die Eisenoxid-Pigmente der magnetischen Schicht wirken als Protonen-Donatoren und/oder die magnetische Schicht weist ph-Werte in einem Bereich zwischen 3,0 und 5,5 auf. Dadurch, daß der Kleber elektrisch isolierend ausgebildet sein kann, ist die Korrosion der metallischen Beschichtung aus Aluminium oder einem anderen Metall, das in der elektrochemischen Spannungsreihe unter Eisen angeordnet ist, unterbunden. Es kann sich also kein Lokalelement zwischen magnetischem Partikel und metallischer Schicht ausbilden, d.h. die Reduktion der magnetischen Partikel und die Oxidation der metallischen Schicht ist unterbunden. Auf diese Weise ist die Haltbarkeit der metallischen Schicht nicht beeinträchtigt. Es kann aber auch vorgesehen sein, den Kleber leitfähig auszubilden, beispielsweise als organischer Leiter und auf diese Weise ein Lokalelement zwischen magnetischem Partikel und metallischer Schicht durch einen elektrischen Kurzschluß unwirksam zu machen.

Die Kleberschicht kann mittels kostengünstiger und großindustriell anwendbarer Drucktechniken wie Tiefdruck, Offset-Druck und Flexo-Druck auf den ersten Follenkörper aufgedruckt werden. Vorteilhaft ist hier, daß sich höhere Auflösungen bei gleichzeitig sinkenden Kosten als bei dem direkten Aufbringen der magnetischen Schicht erzielen lassen. Das Fließverhalten des Klebers kann ohne Qualitätseinbußen für das Sicherheitselement optimiert werden, was bei einer mit magnetischen Pigmenten vermischten Druckfarbe nicht möglich ist.

Mit dem erfindungsgemäßen Verfahren lassen sich also strukturierte magnetische Schichten in sehr hoher Auflösung auf dem ersten Folienkörper erzeugen.

Die mit dem erfindungsgemäßen Verfahren erzeugte partielle magnetische Schicht kann weichmagnetisch, hartmagnetisch oder paramagnetisch ausgebildet sein. Dabei kann insbesondere die für das ausgewählte Leseverfahren maßgebliche Koerzitivkraft der magnetischen Schicht eingestellt werden.

Von weiterem Vorteil ist der mögliche Einsatz des erfindungsgemäßen Verfahrens im Rahmen eines großindustriellen Rolle-zu-Rolle-Prozesses. Dabei können weitere Verfahren vor und/oder nach dem erfindungsgemäßen Verfahren vorgesehen sein. Beispielsweise kann vor dem erfindungsgemäßen Verfahren das Aufbringen einer metallischen Schicht auf den ersten Folienkörper vorgesehen sein.

Das erfindungsgemäße Sicherheitselement zeichnet sich durch hohe Lesesicherheit, gute Anpaßbarkeit an unterschiedliche Leseverfahren, hohe Lebensdauer und geringe Herstellungskosten aus.

Es kann vorgesehen sein, daß in der magnetische Schicht des Sicherheitselements ein maschinenlesbarer Code als Magnetcode gespeichert ist. Hierbei wird beispielsweise beim Vorbeiführen eines magnetischen Lesekopfes an der Schicht in dem magnetischen Lesekopf ein Signal erzeugt, das eine Information in Form eines Sicherheitscodes sein kann. Dabei ist es von besonderem Vorteil, daß die Anwendbarkeit des erfindungsgemäßen Sicherheitselements nicht auf ein Leseprinzip beschränkt ist. Vielmehr kann die Eigenschaft der magnetischen Schicht des Sicherheitselements dem magnetischen Leseprinzip angepaßt sein, so daß die Anwendbarkeit des mit dem erfindungsgemäßen Verfahren hergestellten Sicherheitselements nicht auf einen Lesegerät-Typ beschränkt ist.

Weitere vorteilhafte Ausgestaltungen der Erfindung sind in den Unteransprüchen bezeichnet
Vorteilhafterweise ist der Umfang der Druckwalze so ausgebildet, daß er der Länge eines Sicherheitselements entspricht. Es kann aber auch vorgesehen sein, daß der Umfang der Druckwalze der n-fachen Länge des Sicherheitselements entspricht, wobei n einen ganzzahligen Wert größer 1 bezeichnet.

Um eine ausreichende Belichtung der Kleberschicht bei den oben beschriebenen Verfahren sicherzustellen, ist es vorteilhaft, die magnetische Schicht aus einem semitransparenten Material, beispielsweise aus der oben beschriebenen magnetischen Glasschicht, zu bilden und eine strahlungsdurchlässige Trägerfolie zu verwenden. Hierdurch wird es möglich, die Kleberschicht von Seiten der Transferfolie durch die Transferfolie hindurch zu bestrahlen. Alternativ besteht die Möglichkeit, den ersten Folienkörper strahlungstransparent auszugestalten und die Kleberschicht von Seiten des ersten Folienkörpers durch den Folienkörper hindurch zu belichten.

Die magnetische Schicht kann direkt auf eine Trägerfolie aufgebracht sein. Es kann jedoch auch vorgesehen sein, zwischen magnetischer Schicht und Trägerfolie eine Ablöseschicht anzuordnen. Die Ablöseschicht kann beispielsweise aus 99,5 Teilen Toluol und 0,5 Teilen Esterwachs (Tropfpunkt 90 °C) hergestellt sein und vorzugsweise in einer Dicke von 0,01 bis 0,2 µm auf die Trägerfolie aufgebracht werden.

Das erfindungsgemäße Sicherheitselement zeichnet sich durch einen besonders einfachen Aufbau aus. Weil die partielle magnetische Schicht des Sicherheitselements durch den Kleber positioniert ist, sind die Genauigkeit der Positionierung und der geometrischen Ausbildung der Abschnitte der magnetischen Schicht im wesentlichen nur durch die Präzision des Druckverfahrens oder des Belichtungsverfahrens bestimmt. Sowohl Druckverfahren als auch Belichtungsverfahren können als kontinuierlicher Rolle-zu-Rolie-Fertigungsprozeß vorgesehen sein.

In einer vorteilhaften Ausbildung des Sicherheitselements kann vorgesehen sein, daß der Magnetcode mehrmals auf der Längsachse des Sicherheitselements angeordnet ist. Auf diese Weise ist das von dem magnetischen Lesekopf abgegebene Signal redundant, denn der Magnetcode ist auf der Längenerstreckung des konfektionierten Sicherheitselements mehrmals ausgebildet. Fehler können auf diese Weise leicht eliminiert werden.

Im folgenden wird die Erfindung anhand von mehreren Ausführungsbeispielen unter Zuhilfenahme der beiliegenden Zeichnungen beispielhaft erläutert.

Es zeigen -:
- Fig. 1: eine funktionelle Darstellung eines Verfahrens-Ablaufs gemäß eines ersten Ausführungsbeispiels der Erfindung;
- Fig. 2: eine funktionelle Darstellung eines Verfahrens-Ablaufs
- Fig. 3: eine funktionelle Darstellung eines Verfahrens-Ablaufs
- Fig. 4: eine funktionelle Darstellung eines Verfahrens-Ablaufs
- Fig. 5: den Schichtaufbau einer mit Kleber beschichteten Grundfolie für den Verfahrensablauf nach Fig. 1;
- Fig. 6: den Schichtaufbau einer Transferfolie für den Verfahrensablauf nach Fig. 1, Fig. 2 oder Fig. 3;
- Fig. 7: den Schichtaufbau einer nach dem Verfahren gemäß Fig. 1 hergestellten Folie;
- Fig. 8: den Schichtaufbau einer nach dem Verfahren gemäß Fig. 2 oder Fig. 3 hergestellten Folie.

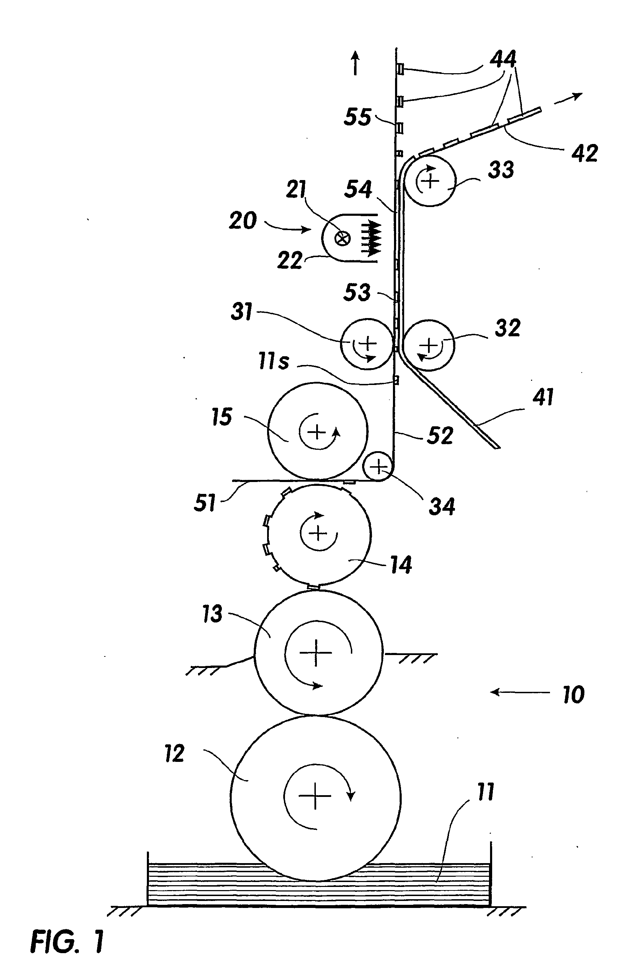

Fig. 1 skizziert einen Ausschnitt aus einem Rolle-zu-Rolle-Fertigungsprozeß mittels dem eine Folie mit Sicherheitselementen mit partiellen magnetischen Schichten hergestellt wird.

Fig. 1 zeigt eine Druckstation 10, eine Belichtungsstation 20, drei Walzen 31, 32 und 33 sowie eine Umlenkrolle 34. Ein Folienkörper 51 wird der Druckstation 10 zugeführt. Der von der Druckstation 10 bearbeitete Folienkörper 51 wird als Folie 52 über die Umlenkrolle 34 dem Walzenpaar 31 und 32 zugeführt, das auf die Folie 52 eine von einer Vorrats-Rolle (in Fig. 1 nicht dargestellt) abgerollte Transferfolie 41 aufbringt. Hierdurch ergibt sich die Folie 53. Die von der Belichtungsstation 20 bearbeitete Folie 53 wird als Folie 54 der Walze 33 zugeführt, wo eine Trägerfolie 53 von der Folie 54 abgezogen wird und als Rest-Folie eine Folie 55 verbleibt.

Bei dem Folienkörper 51 kann es sich im einfachsten Fall um eine Trägerfolie handeln. Eine solche Trägerfolie besteht bevorzugt aus einer Kunststoff-Folie mit einer Stärke von 6 bis 200 µm, beispielsweise aus einer Polyester-Folie mit einer Stärke von 19 bis 38 µm. Üblicherweise wird der Folienkörper 51 jedoch neben einer derartigen Trägerfolie noch weitere, in vorangehenden Verfahrensprozessen aufgebrachte Schichten aufweisen. Derartige Schichten sind beispielsweise Lackschichten und metallische Schichten. Hierbei ist es auch möglich, daß diese Schichten bereits in strukturierter Form im Folienkörper 51 vorliegen, Die Folie 51 wird der Druckstation 10 bevorzugt registriert zugeführt, so dass die Flexoform in dem Druckwerk den Kleber nur an die vorbestimmten Stellen druckt. Weist die Trägerfolie beispielsweise eine partiell ausgeformte Metallschicht auf (z.B. Strichcode), so wird der Kleber registerhaltig zu den metallisierten Bereichen aufgedruckt.

Die Druckstation 10 verfügt hierfür über eine Insetting-Vorrichtung, die über eine Lesekopf Markierungen auf der Trägerfolie registriert und den Motor der Druckwalze 14 derart steuert, daß der Aufdruck des Klebers im Register erfolgt.

Die Druckstation 10 weist eine Farbwanne mit einem UV-vernetzbaren Kleber 11 auf. Mittels mehrerer Übertragungswalzen 12 und 13 wird der Kleber 11 auf einen Druckzylinder 14 aufgebracht.

Der Druckzylinder 14 bedruckt nun den zwischen dem Druckzylinder 14 und einer Gegendruckwalze 15 hindurchiaufenden Folienkörper 51 musterförmig strukturiert mit einer Kleberschicht 11s aus dem UV-vernetzbaren Kleber 11.

Bei der Druckstation 10 handelt es sich bevorzugt um eine Offset- oder Flexo-Druckstation. Es ist jedoch auch möglich, daß es sich bei der Druckstation 10 um eine Tiefdruck-Druckstation handelt.

Die Kleberschicht 11s hat vorzugsweise eine Dicke von 0,5 bis 10 µm.

Als UV-vernetzbarer Kleber 11 können bevorzugt folgende Kleber verwendet werden:
Foilbond UHV 0002 von AKZO NOBEL INKS und UVAFLEX UV Adhesive VLOOOZA von Zeller + Gmelin GmbH.

Bevorzugt werden die Kleber mit einem Auftraggewicht von 1 bis 5 g/m² auf den Folienkörper 51 aufgebracht.

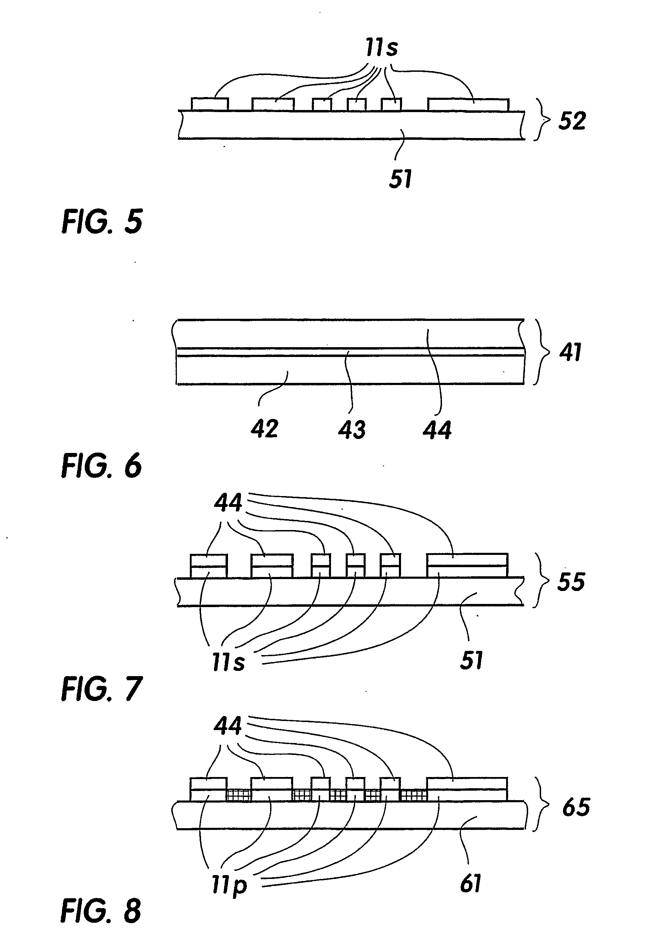

Durch das Bedrucken ergibt sich so eine kleberbeschichtete Folie 52, bei der auf dem Folienkörper 51 eine musterförmig strukturierte Kleberschicht 11s aufgebracht ist (siehe Fig. 5).

Je nach Art des verwendeten Klebers 11 ist es hierbei auch möglich, daß die kleberbeschichtete Folie 52 einen Trockenkanal durchläuft, in dem die Kleberschicht 11s beispielsweise bei einer Temperatur von 100 bis 120 °C getrocknet wird.

Fig. 6 zeigt den Aufbau der Transferfolie 41. Die Transferfolie 41 weist eine Trägerfolie 42, eine Ablöseschicht 43 und eine magnetische Schicht 44 auf.

Bei der Trägerfolie 42 handelt es sich um eine Kunststoff-Folie einer Dicke von 4 bis 75 µm. Vorzugsweise handelt es sich bei der Trägerfolie 42 um eine Folie aus Polyester, Polyethylen, einem Acrylat oder einem geschäumten Verbundstoff. Die Dicke der Trägerfolie 42 beträgt bevorzugt 12 µm.

Die Ablöseschicht 43 besteht bevorzugt aus einem Wachstyp. Die Ablöseschicht 43 kann beispielsweise aus 99,5 Teilen Toluol und 0,5 Teilen Esterwachs (Tropfpunkt 90°C) hergestellt sein.

Auf die Ablöseschicht 43 kann auch verzichtet werden, wenn die Materialien der Trägerfolie 41 und der magnetischen Schicht 44 derart gewählt sind, daß die Adhäsionskräfte zwischen der magnetischen Schicht 44 und der Trägerfolie 43 ein sicheres und schnelles Ablösen der magnetischen Schicht 44 nicht behindern. Vorzugsweise wird die Ablöseschicht 43 in einer Dicke von 0,01 bis 0,2 µm auf die Trägerfolie 42 aufgebracht.

Die magnetische Schicht 44 ist vorzugsweise als Transferschicht ausgebildet, bestehend aus einer Ablöseschicht, einer Dispersion eines Magnetpigmentes, und einer Haftvermittlerschicht, die für einen Verbund zwischen der Magnetdispersion und dem UV-vernetzenden Kleber sorgt. Das für die Dispersion verwendete Magnetpigment kann niedrig oder hochkoerzitiv sein. Für die Aufbringung der magnetischen Dispersion auf die Ablöseschicht können die bekannten Verfahren, beispielsweise ein Druckverfahren, dienen.

Die magnetische Schicht 44 kann aber auch als Schicht aus amorphem Metallglas ausgebildet sein, d.h. einer Legierung aus vorzugsweise Kobalt und/oder Eisen und/oder Chrom und/oder Nickel und/oder Silizium und/oder Bor in amorpher Struktur. Als Beschichtungsverfahren für das Aufbringen derartiger Schichten auf die Trägerfolie 42 bzw. die Ablöseschicht 43 eignet sich insbesondere das Sputtern.

Die magnetische Schicht 44 kann in Abhängigkeit von ihrer Zusammensetzung weichmagnetisch, hartmagnetisch oder paramagnetisch ausgebildet sein, so daß sie kompatibel zu unterschiedlichen Leseverfahren der magnetischen Lesegeräte ausgebildet sein kann.

Die Belichtungsstation 20 nach Fig. 1 weist eine UV-Lampe 21 sowie einen Reflektor 22 auf, der die von der UV-Lampe 21 abgestrahlte UV-Strahlung auf die Folie 53 bündelt. Die Leistung der UV-Lampe 21 wird hierbei so gewählt, daß die Kleberschicht 11s beim Durchlaufen der Belichtungsstation 20 mit einer ausreichenden Energiemenge bestrahlt wird, die eine sichere Aushärtung der Kleberschicht 11 k gewährleistet. Wie in Fig. 1 gezeigt, wird die Folie 53 hierbei von Seiten des Folienkörpers 51 bestrahlt. Dies ist möglich, wenn der Folienkörper 51 UV-transparent ausgebildet ist. Wenn die magnetische Schicht 44 als eine transparente oder semi-transparente Schicht ausgestaltet ist, beispielsweise wie oben ausgeführt, als magnetisches Glas, kann die Folie 53 auch von Seiten der Trägerfolie 42 bestrahlt werden. Allerdings ist weiter hierfür erforderlich, daß die Trägerfolie 42 sowie die Ablöseschicht 43 aus einem UV-transparenten Material bestehen.

Durch die Aushärtung der musterförmig strukturieren Kleberschicht 11s wird die magnetische Schicht 44 an den Stellen, an denen die Kleberschicht 11s vorgesehen ist, mit dem Folienkörper 51 verklebt. Wird so im folgenden die Trägerfolie 42 von dem restlichen Folienkörper der Folie 54 abgezogen, so haftet die magnetische Schicht 42 in den Bereichen, in denen die Kleberschicht 11s aufgedruckt ist, am Folienkörper 51 und wird so an diesen Stellen aus der Transferfolie 41 heraus gelöst. An den übrigen Stellen überwiegt die Haftung zwischen magnetischer Schicht 44 und Ablöseschicht 43, so daß hier die magnetische Schicht 44 in der Transferfolie 41 verbleibt.

Fig. 7 zeigt nun die Folie 55, d.h. den sich ergebenden Folienkörpers nach Abziehen der Trägerfolie 42. Fig. 7 zeigt den Folienkörper 51, die Kleberschicht 11s und die magnetische Schicht 44. Wie in Fig. 7 gezeigt, verfügt die Folie 55 nun über eine musterförmig strukturierte magnetische Schicht 44, die gemäß der musterförmig strukturierten Kleberschicht 11s auf dem Folienkörper 51 angeordnet ist.

Weiter ist es auch möglich, daß die Folie 55 neben der partiell aufgebrachten magnetischen Schicht 44 noch weitere Schichten, aufweist, die Sicherheitsmerkmale realisieren. Bevorzugt weist die Folie 44 hierbei diffraktive, teilmetallisierte Bereiche auf, die in Betrachtungsrichtung oberhalb der magnetischen Bereiche der Magnetschicht 44 in der Folie 55 angeordnet sind. Die magnetisch detektierbaren Bereiche sind hierbei bevorzugt registerhaltig zu den diffraktiven, vorzugsweise mit Aluminium teilmetallisierten Bereichen der Folie 44 angeordnet. Weiter ist es möglich, zusätzlich oder anstelle derartiger diffraktiver teilmetallisierter Bereiche Farbwechselelemente, beispielsweise bestehend aus Dünnfilmelementen oder Dünnfilmpigmenten, oder UV- oder IR-fluoreszierende Elemente in der Folie 44 vorzusehen und registerhaltig zu den magnetisch detektierbaren Bereichen anzuordnen.

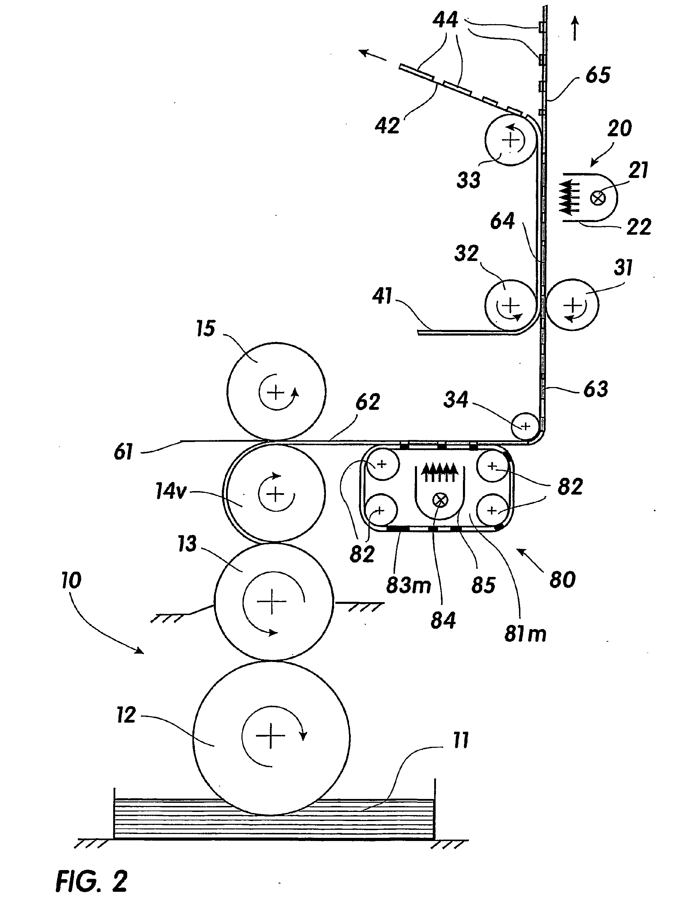

Fig. 2 zeigt die Druckstation 10, eine Belichtungsstation 80, die Belichtungsstation 20, die Umlenkrolle 34, das Walzenpaar 31 und 32 und die Ablösewalze 33.

Die Druckstation 100 ist wie die Druckstation 10 nach Fig. 1 aufgebaut, mit dem Unterschied, daß der Druckzylinder 14 durch einen Druckzylinder 14v ersetzt ist, der den Kleber 11 vollflächig auf eine zugeführten Folienkörper 61 aufdruckt. Vorzugsweise wird hierbei ein prepolymerer UV-vernetzbarer Kleber verwendet.

Hierbei ist es auch möglich, daß die Kleberschicht auf den Folienkörper 61 nicht durch ein Druckverfahren, sondern durch ein anderes Beschichtungsverfahren, beispielsweise Streichen, Gießen oder Sprühen, aufgebracht wird. Weiter ist es auch möglich, daß der Aufdruck der Kleberschicht auf den Folienkörper 61 ebenfalls musterförmig erfolgt und damit das hier beschriebene Verfahren mit dem Verfahren nach Fig. 1 kombiniert wird.

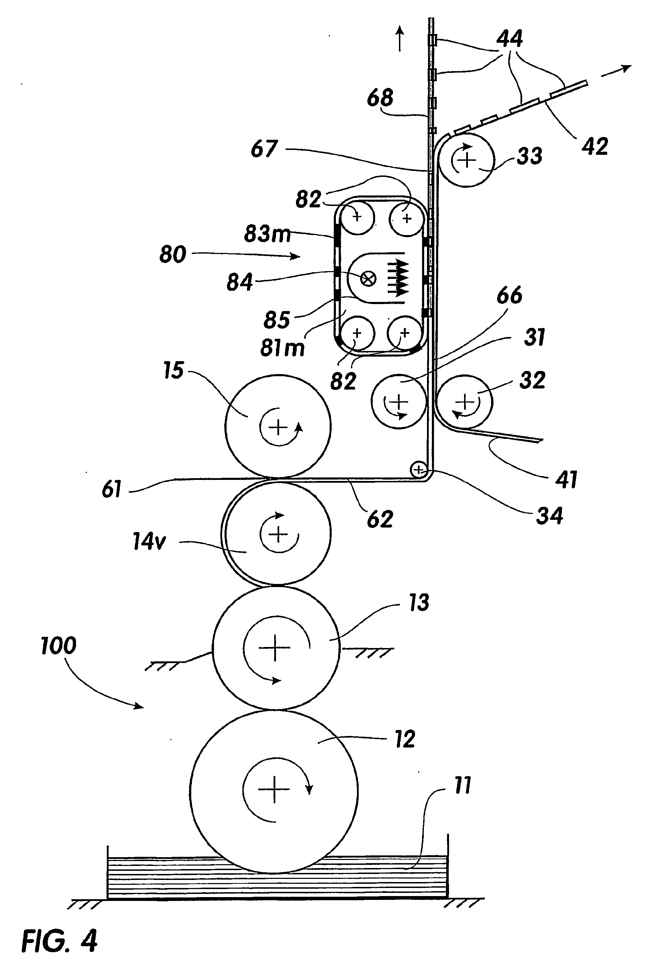

Der Folienkörper 61 und die auf diesen aufgedruckte Kleberschicht 11v aus einem UV-vernetzbaren Kleber sind wie der Folienkörper 51 und die Kleberschicht 11 s nach Fig. 4 ausgestaltet, mit dem Unterschied, daß hier die Kleberschicht 11v bevorzugt vollflächig auf den Folienkörper 61 aufgedruckt ist. Die sich nach Auftragen der Kleberschicht 11v auf den Folienkörper 61 ergebende Folie 62 wird einer Belichtungsstation 80 zugeführt.

Bei der Belichtungsstation 80 handelt es sich um einen Masken-Belichter 81 m, der eine Belichtung von Rolle zu Rolle mittels eines mit der Laufgeschwindigkeit der Folie 62 synchronisierten Maskenbandes ermöglicht. Der Masken-Belichter 81 m weist mehrere Umlenkrollen 82, ein Maskenband 83m, eine UV-Lampe 84 und einen Reflektor 85 auf. Das Maskenband 83m weist UV-transparente und opake oder reflektierende Bereiche auf. Das Maskenband 83m bildet so eine UV-Endlosmaske, die die Folie 62 gegenüber der UV-Lampe 84 abdeckt und eine kontinuierliche, musterförmige Bestrahlung der Folie 62 mit UV-Licht ermöglicht. Die Geschwindigkeit des Maskenbandes 83m wird, wie bereits oben erläutert, mit der Geschwindigkeit der Folie 62 synchronisiert, wobei vorgesehen sein kann, daß zusätzliche optische Markierungen auf der Folie 62 eine passergenaue Belichtung ermöglichen. Die Leistung der UV-Lampe 84 ist hierbei so gewählt, daß der Folie 62 beim Durchlauf durch den Masken-Belichter 81 m eine für die Aushärtung der Kleberschicht ausreichende UV-Energiemenge zugeführt wird.

Vorzugsweise wird die Folie vom Masken-Belichter 81m mit kollimiertem UV-Licht bestrahlt.

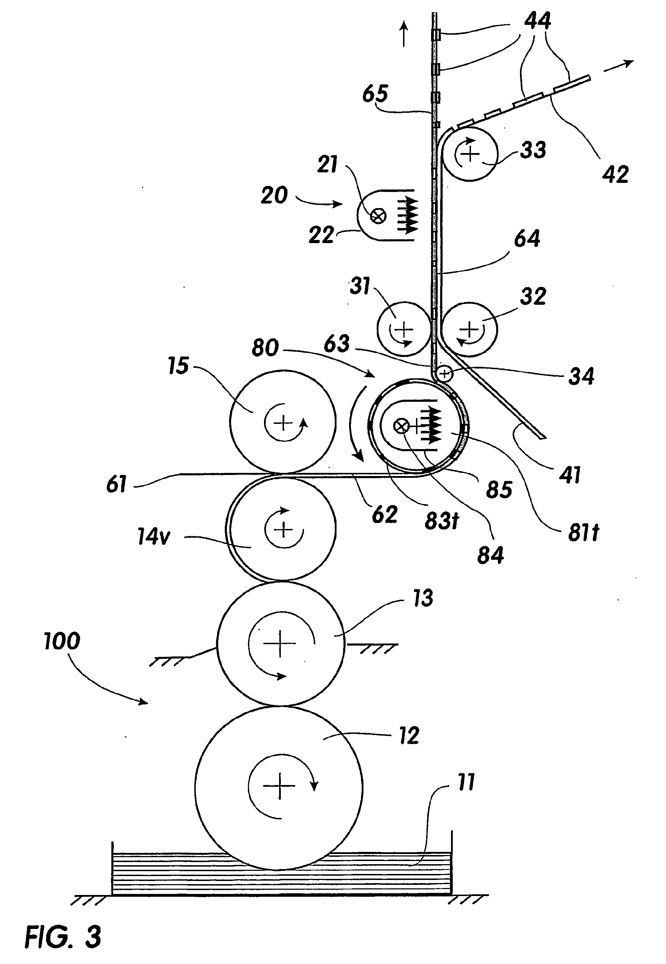

Anstelle einer Belichtungsstation 80 mit einem Masken-Belichters ist es auch möglich, einen Trommel-Belichter 81t zu verwenden, der über eine Maske in Form einer Trommel 83t verfügt, über die die Folie 62 geführt wird, wie in dem Ausführungsbeispiel in Fig. 3 gezeigt.

Durch die musterförmige Bestrahlung mit UV-Licht härtet die Kleberschicht musterförmig strukturiert aus, so daß eine Folie 63 mit ausgehärteten und nicht ausgehärteten Bereichen der Kleberschicht dem Walzenpaar 31 und 32 zugeführt wird. Durch das Walzenpaar 31 und 32 wird nun die Transferfolie auf die Folie 63 aufgebracht. Die Transferfolie ist hierbei wie die Transferfolie 41 nach Fig. 5 ausgeführt. Damit ergibt sich eine Folie 64, die aus dem Folienkörper 61, einer partiell ausgehärteten Kleberschicht 11 p, der magnetischen Schicht 44, der Ablöseschicht 43 und der Trägerfolie 42 besteht. In den Bereichen, in denen die Kleberschicht 11 p nicht ausgehärtet ist, ist die Kleberschicht 11 p noch klebrig, so daß hier Adhäsionskräfte zwischen Kleberschicht 11 p und darüber liegender magnetischer Schicht 44 wirken. In den übrigen Bereichen, in denen die Kleberschicht 11 p ausgehärtet ist, ist das nicht der Fall.

In einer weiteren Belichtungsstation, die wie die Belichtungsstation 20 nach Fig. 1 ausgestaltet ist, wird nun die Kleberschicht in den noch nicht ausgehärteten Bereichen vollständig ausgehärtet, um eine sichere Verbindung zwischen magnetischer Schicht 44 und Folienkörper 61 zu gewährleisten. Auf die Belichtungsstation 20 könnte aber auch verzichtet werden.

Beim Abziehen der Trägerfolie 42 von dem restlichen Folienkörper haftet damit die magnetische Schicht 44 in den Bereichen, in denen die Kleberschicht nicht ausgehärtet ist oder die Kleberschicht in der Belichtungsstation 20 ausgehärtet ist, an dem Folienkörper 61 und wird so von der Trägerfolie 42 abgelöst. In den übrigen Bereichen bewirken die Adhäsionskräfte zwischen der Ablöseschicht 43 und der magnetischen Schicht 44, daß in diesen Bereichen die magnetische Schicht 44 nicht abgelöst wird und auf der Trägerfolie 42 verbleibt. Damit ergibt sich nach Abziehen der Trägerfolie 42 eine Folie 65 mit einer partiellen musterförmigen magnetischen Schicht 44, die über eine vollflächige Kleberschicht mit dem Folienkörper 61 verbunden ist.

Fig. 8 zeigt die Folie 65, d.h. den sich ergebenden Folienkörper nach Abziehen der Trägerfolie 42. Fig. 8 zeigt den Folienkörper 61, die Kleberschicht 11 p, deren in der Belichtungsstation 80 ausgehärteten Bereiche schraffiert gekennzeichnet sind, und die magnetische Schicht 44. Wie in Fig. 8 gezeigt, verfügt die Folie 65 nun über eine musterförmig strukturierte magnetische Schicht 44, die gemäß der musterförmig strukturierten Kleberschicht 11 p auf dem Folienkörper 61 angeordnet ist.

In einem weiteren Ausführungsbeispiel, das in Fig. 4 dargestellt ist, wird ein UV-vernetzbarer Kleber verwendet, dessen Adhäsionskraft gegenüber der magnetischen Schicht 44 oder gegenüber dem Folienkörper 61 geringer ist als die Adhäsionskraft zwischen der magnetischen Schicht 44 und der Trägerfolie 42. Natürlich ist es auch möglich, denselben Kleber wie nach Fig. 2 oder Fig. 3 zu verwenden und durch die Wahl der Materialien der Trägerfolie 42, des Folienkörpers 61 oder der Ablöseschicht 43 eine entsprechende Verteilung der Adhäsionskräfte herbeizuführen.

Der Druckstation 100 wird der Folienkörper 61 zugeführt, der wie in dem Ausführungsbeispiel nach Fig. 2 mit einer Kleberschicht beschichtet wird, wodurch sich die Folie 62 nach Fig. 2 ergibt. Auf die Folie 62 wird nun durch das Walzenpaar 31 und 32 die Transferfolie 41 aufgebracht. Die Transferfolie 41 ist hierbei nach Fig. 6 ausgestaltet. Es ergibt sich damit eine Folie 66, die aus dem Folienkörper 61, einer vollflächigen, nicht ausgehärteten Kleberschicht, der magnetischen Schicht 44, der Ablöseschicht 43 und der Trägerfolie 42 besteht.

Die Folie 66 wird nun mittels des Masken-Belichters 81 m belichtet, der wiederum wie der Masken-Belichter 81 m nach Fig. 2 ausgestaltet ist. Nach der Belichtung mittels des Masken-Belichters 81 m ergibt sich damit eine Folie 67, die aus dem Folienkörper 61, einer musterförmig strukturiert ausgehärteten Kleberschicht, der magnetischen Schicht 44, der Ablöseschicht 43 und der Trägerfolie 42 besteht.

Wird so die Trägerfolie 42 von dem restlichen Folienkörper der Folie 67 abgezogen, so verbleibt in den Bereichen, in denen die Kleberschicht ausgehärtet ist und damit die magnetische Schicht 44 mit dem Folienkörper 61 verklebt ist, die magnetische Schicht auf dem Folienkörper 61. In den übrigen Bereichen sind die Adhäsionskräfte, die ein Ablösen der magnetischen Schicht 44 von der Trägerfolie 42 verhindern, größer als die Adhäsionskräfte zwischen der magnetischen Schicht 44 und dem Folienkörper 61, so daß die magnetische Schicht 44 in diesen Bereichen nicht von der Trägerfolie 42 abgelöst wird. Damit ergibt sich eine Folie 68, die eine musterförmig strukturierte magnetische Schicht 44 aufweist, die über eine entsprechend musterförmig strukturierte ausgehärtete Kleberschicht mit dem Folienkörper 61 verbunden ist.

Vorteilhafterweise kann vorgesehen sein, durch Zerteilen der mit der magnetischen Schicht beschichteten Grundfolie konfektionierte Sicherheitsfäden zu gewinnen, wie sie beispielsweise für Banknoten, Kreditkarten, Ausweise oder Tickets vorgesehen sind.

## Patentansprüche

1. Verfahren zur Herstellung eines Sicherheitselements für Wertdokumente, wie Banknoten, Kreditkarten, Ausweise oder Tickets, umfassend einen zweiten Folienkörper aufweisend eine partielle magnetische Beschichtung, wobei auf einen ersten Folienkörper (51, 61) eine Kleberschicht (11 p, 11s, 11v) aus einem strahlungsvernetzbaren Kleber aufgebracht wird, wobei die Kleberschicht (11p, 11s, 11v) aus dem strahlungsvernetzbaren Kleber musterförmig strukturiert ausgehärtet wird, indem die Kleberschicht (11 p, 11 s, 11 v) in einer als erstes Muster strukturierten Form auf den ersten Folienkörper (51, 61) aufgebracht und bestrahlt wird, wobei die Bestrahlung nach Aufbringen einer Transferfolie (41) auf die Kleberschicht (11 p, 11s, 11v) erfolgt, wobei die Transferfolie (41), die eine Trägerfolie (42) und eine magnetische Schicht (44) aufweist, mit einer Orientierung der magnetischen Schicht (44) zur Kleberschicht (11 p, 11 s, 11 v) auf die Kleberschicht (11p, 11s, 11v) aufgebracht wird, und dass die Trägerfolie (42) von dem, den ersten Folienkörper (51, 61), die Kleberschicht (11p, 11s, 11v) und Bereiche der magnetischen Schicht (44) als partielle magnetische Beschichtung umfassenden zweiten Folienkörper abgezogen wird, wobei in einem ersten musterförmig strukturierten Bereich die magnetische Schicht (44) auf dem ersten Folienkörper (51, 61) verbleibt und in einem zweiten musterförmig strukturierten Bereich die magnetische Schicht (44) auf der Trägerfolie (42) verbleibt und mit der Trägerfolie (42) von dem ersten Folienkörper (51, 61) abgezogen wird.

2. Verfahren nach Anspruch 1,
**dadurch gekennzeichnet,**
**dass** die Kleberschicht (11 p, 11 s, 11 v) aus einem strahlungsvernetzbaren Kleber auf den ersten Folienkörper (51, 61) mittels eines Druckverfahrens musterförmig strukturiert aufgebracht wird, dass die Transferfolie (41) auf die musterförmig strukturierte Kleberschicht (11p, 11s, 11v) aufgebracht wird, dass die Kleberschicht (11p, 11 s, 11 v) durch Bestrahlung ausgehärtet wird, und dass die Trägerfolie (42) von dem den ersten Folienkörper (51, 61), die Kleberschicht (11p, 11s, 11v) und Bereiche der magnetischen Schicht (44) umfassenden zweiten Folienkörper abgezogen wird, wobei die magnetische Schicht (44) in dem mit dem strahlungsvernetzbaren Kleber (11 p, 11 s, 11 v) musterförmig beschichteten ersten Bereich auf dem ersten Folienkörper (51, 61) verbleibt und in dem übrigen, zweiten Bereich mit der Trägerfolie (42) abgezogen wird.

3. Verfahren nach einem der vorhergehenden Ansprüche,
**dadurch gekennzeichnet,**
**daß** die magnetische Schicht (44) als eine Schicht aus magnetischen Nano-Partikeln ausgebildet wird.

4. Verfahren nach Anspruch 3,
**dadurch gekennzeichnet,**
**daß** die magnetische Schicht (44) als eine Schicht aus magnetischen Nano-Partikeln aus Eisenoxid ausgebildet wird.

5. Verfahren nach Anspruch 3 oder Anspruch 4,
**dadurch gekennzeichnet,**
**daß** die Schicht aus Nano-Partikeln als Niederschlag aus einer Lösung auf die Trägerfolie (42) aufgebracht wird.

6. Verfahren nach Anspruch 3 oder Anspruch 4,
**dadurch gekennzeichnet,**
**daß** die magnetische Schicht durch Sputtern auf die Trägerfolie (42) aufgebracht wird.

7. Verfahren nach einem der vorhergehenden Ansprüche,
**dadurch gekennzeichnet,**
**daß** die magnetische Schicht (44) aus amorphem Metallglas gebildet wird.

8. Verfahren nach Anspruch 6,
**dadurch gekennzeichnet,**
**daß** das amorphe Metallglas aus Eisen und/oder Kobalt und/oder Chrom und/oder Nickel und/oder Silizium und/oder Bor gebildet wird.

9. Verfahren nach Anspruch 8,
**dadurch gekennzeichnet,**
**daß** das amorphe Metallglas durch Sputtern auf die Trägerfolie (42) aufgebracht wird.

10. Verfahren nach einem der vorhergehenden Ansprüche,
**dadurch gekennzeichnet,**
**daß** die magnetische Schicht (44) semi-transparent ausgebildet wird, daß die Trägerschicht (42) strahlungstransparent ausgebildet wird und daß die Kleberschicht (11 p, 11 s, 11v) von Seiten der Transferfolie (41) durch die Transferfolie (41) belichtet wird.

11. Verfahren nach einem der vorhergehenden Ansprüche,
**dadurch gekennzeichnet,**
**daß** der erste Folienkörper (51, 61) strahlungstransparent ausgebildet wird und die Kleberschicht (11p, 11 s, 11 v) von Seiten des ersten Folienkörpers (51, 61) durch den ersten Folienkörper (51, 61) belichtet wird.

12. Verfahren nach einem der vorhergehenden Ansprüche,
**dadurch gekennzeichnet,**
**daß** ein strahlungsvernetzbarer Kleber verwendet wird, der im nicht ausgehärteten Zustand eine geringere Adhäsionskraft gegenüber der magnetischen Schicht als die Adhäsionskraft zwischen der magnetischen Schicht (44) und der Trägerfolie (42) besitzt.

13. Verfahren nach einem der vorhergehenden Ansprüche,
**dadurch gekennzeichnet,**
**daß** die Kleberschicht (11 p, 11 s, 11 v) aus einem elektrisch nicht leitfähigen Kleber gebildet wird.

14. Verfahren nach einem der vorhergehenden Ansprüche,
**dadurch gekennzeichnet,**
**daß** die Kleberschicht (11 p, 11 s, 11 v) mittels Tiefdruck auf den ersten Folienkörper (51, 61) aufgedruckt wird.

15. Verfahren nach einem der vorhergehenden Ansprüche,
**dadurch gekennzeichnet,**
**daß** die Kleberschicht (11p, 11s, 11v) mittels Offset-Druck oder Flexo-Druck auf den ersten Folienkörper (51, 61) aufgedruckt wird.

16. Verfahren nach einem der vorhergehenden Ansprüche,
**dadurch gekennzeichnet,**
**daß** eine Transferfolie (41) verwendet wird, die eine Ablöseschicht (43) zwischen Trägerfolie (42) und magnetischer Schicht (44) aufweist.

17. Sicherheitselement, insbesondere Sicherheitsfaden, mit zumindest einer magnetischen Schicht (44), wobei
das Sicherheitselement eine Kleberschicht (11p, 11s, 11v) aus einem strahlungsvernetzbaren Kleber aufweist, und wobei die Kleberschicht (11p, 11s, 11v) zwischen einer musterförmig strukturierten magnetischen Schicht (44) und einem ersten Folienkörper (51, 61) des Sicherheitselements angeordnet ist und die musterförmige strukturierte magnetische Schicht (44) mit dem ersten Folienkörper (51, 61) verbindet, wobei die magnetische Schicht (44) semi-transparent ist und/oder der erste Folienkörper (51, 61) strahlungstransparent ist und wobei die magnetische Schicht (44) magnetische detektierbare Bereiche unterschiedlicher Größe mit Strichstärken im Bereich von 0,3 mm bis 10 mm ausbildet.

18. Sicherheitselement nach Anspruch 17,
**dadurch gekennzeichnet,**
**daß** die magnetische Schicht aus magnetischen Nano-Partikeln ausgebildet ist.

19. Sicherheitselement nach Anspruch 18,
**dadurch gekennzeichnet,**
**daß** die magnetische Schicht aus magnetischen Nano-Partikeln aus Eisenoxid ausgebildet ist.

20. Sicherheitselement nach einem der Ansprüche 17 bis 19,
**dadurch gekennzeichnet,**
**daß** die magnetische Schicht (44) aus amorphem Metallglas ausgebildet ist.

21. Sicherheitselement nach einem der Ansprüche 17 bis 20,
**dadurch gekennzeichnet,**
**daß** der erste Folienkörper (51, 61) eine Metallschicht aufweist.

22. Sicherheitselement nach Anspruch 21,
**dadurch gekennzeichnet,**
**daß** der erste Folienkörper (51, 61) eine partielle Metallschicht aufweist.

23. Sicherheitselement nach Anspruch 21 oder Anspruch 22,
**dadurch gekennzeichnet,**
**daß** der erste Folienkörper (51, 61) mit Aluminium metallisiert ausgebildet ist.

24. Sicherheitselement nach einem der Ansprüche 20 oder 23,
**dadurch gekennzeichnet,**
**daß** in die Metallschicht eine diffraktive Struktur abgeformt ist.

25. Sicherheitselement nach einem der Ansprüche 23 oder 24,
**dadurch gekennzeichnet,**
**daß** der erste Folienkörper mit Aluminium teilmetallisiert ist und die Kleberschicht und die Magnetschicht registerhaltig zu den mit Aluminium teilmetallisierten Bereichen auf die teilmetallisierte Aluminiumschicht aufgebracht sind.

26. Sicherheitselement nach einem der Ansprüche 17 bis 25
**dadurch gekennzeichnet,**
**daß** die Kleberschicht (11 p, 11 s, 11 v) aus einem strahlungsvernetzbaren Kleber in gleicher Weise wie die musterförmig strukturierte magnetische Schicht (44) musterförmig strukturiert ist.

27. Sicherheitselement nach einem der Ansprüche 17 bis 26,
**dadurch gekennzeichnet,**
**daß** die Kleberschicht (11 p, 11 s, 11 v) als unter UV-Licht härtender Kleber ausgebildet ist.

28. Sicherheitselement nach einem der Ansprüche 17 bis 27,
**dadurch gekennzeichnet,**
**daß** die Kleberschicht (11p, 11 s, 11 v) als nichtleitende Schicht zur Verhinde einer Lokalelementausbildung zwischen magnetischer Schicht (44) und Metallschicht des ersten Folienkörpers (51, 61) ausgebildet ist.

## Claims

1. Method for producing a security element for valuable documents, such as banknotes, credit cards, identity cards or tickets, comprising a second film body having a partial magnetic coating, wherein an adhesive layer (11p, 11s, 11v) made from a radiation-crosslinkable adhesive is applied onto a first film body, wherein the adhesive layer (11p, 11s, 11v) made from a radiation-crosslinkable adhesive is cured in a state structured as a pattern, by applying the adhesive layer (11p, 11s, 11v) to the first film body (51, 61) in a form in which it is structured as a first pattern and radiating said layer, wherein the irradiation takes place after a transfer film (41) has been applied onto the adhesive layer (11p, 11s, 11v), wherein the transfer film (41), which has a carrier film (42) and a magnetic layer (44), is applied onto the adhesive layer (11p, 11s, 11v) such that the magnetic layer (44) is orientated towards the adhesive layer (11p, 11s, 11v), and in that the carrier film (42) is peeled off from the second film body comprising the first film body (51, 61), the adhesive layer (11p, 11s, 11v) and regions of the magnetic layer (44) as a partial magnetic coating, wherein the magnetic layer (44) remains on the first film body (51, 61) in a first region, which is structured in the form of a pattern, and the magnetic layer (44) remains on the carrier film (42) in a second region, which is structured in the form of a pattern, and is peeled off with the carrier film (42) from the first film body (51, 61).

2. Method according to Claim 1, **characterized in that** the adhesive layer (11p, 11s, 11v) made from a radiation-crosslinkable adhesive is applied onto the first film body (51, 61) by means of a printing method in a state structured as a pattern, **in that** the transfer film (41) is applied onto the adhesive layer (11p, 11s, 11v), which is structured in the form of a pattern, **in that** the adhesive layer (11p, 11s, 11v) is cured by irradiation, and **in that** the carrier film (42) is peeled off from the second film body comprising the first film body (51, 61), the adhesive layer (11p, 11s, 11v) and regions of the magnetic layer (44), wherein the magnetic layer (44) remains on the first film body (51, 61) in the first region, which is coated in the form of a pattern with the radiation-crosslinkable adhesive (11p, 11s, 11v), and is peeled off with the carrier film (42) in the remaining, second region.

3. Method according to one of the preceding claims, **characterized in that** the magnetic layer (44) is designed as a layer of magnetic nanoparticles.

4. Method according to Claim 3, **characterized in that** the magnetic layer (44) is designed as a layer of magnetic nanoparticles of iron oxide.

5. Method according to Claim 3 or Claim 4, **characterized in that** the layer of nanoparticles is applied onto the carrier film (42) as a precipitate from a solution.

6. Method according to Claim 3 or Claim 4, **characterized in that** the magnetic layer is applied onto the carrier film (42) by way of sputtering.

7. Method according to one of the preceding claims, **characterized in that** the magnetic layer (44) is formed from amorphous metal glass.

8. Method according to Claim 6, **characterized in that** the amorphous metal glass is formed from iron and/or cobalt and/or chromium and/or nickel and/or silicon and/or boron.

9. Method according to Claim 8, **characterized in that** the amorphous metal glass is applied onto the carrier film (42) by way of sputtering.

10. Method according to one of the preceding claims, **characterized in that** the magnetic layer (44) is of semi-transparent design, **in that** the carrier layer (42) is designed to be transparent to radiation and **in that** the adhesive layer (11p, 11s, 11v) is exposed to light from the side of the transfer film (41) through the transfer film (41).

11. Method according to one of the preceding claims, **characterized in that** the first film body (51, 61) is designed to be transparent to radiation and the adhesive layer (11p, 11s, 11v) is exposed to light from the side of the first film body (51, 61) through the first film body (51, 61).

12. Method according to one of the preceding claims, **characterized in that** a radiation-crosslinkable adhesive is used, which has, in the non-cured state, a smaller adhesion force with respect to the magnetic layer than the adhesion force between the magnetic layer (44) and the carrier film (42).

13. Method according to one of the preceding claims, **characterized in that** the adhesive layer (11p, 11s, 11v) is formed from an electrically nonconductive adhesive.

14. Method according to one of the preceding claims, **characterized in that** the adhesive layer (11p, 11s, 11v) is printed onto the first film body (51, 61) by means of gravure printing.

15. Method according to one of the preceding claims, **characterized in that** the adhesive layer (11p, 11s, 11v) is printed onto the first film body (51, 61) by means of offset printing or flexographic printing.

16. Method according to one of the preceding claims, **characterized in that** a transfer film (41) is used that has a release layer (43) between carrier film (42) and magnetic layer (44).

17. Security element, in particular security thread, with at least one magnetic layer (44), wherein the security element has an adhesive layer (11p, 11s, 11v) made from a radiation-crosslinkable adhesive, and wherein the adhesive layer (11p, 11s, 11v) is arranged between a magnetic layer (44), which is structured in the form of a pattern, and a first film body (51, 61) of the security element and connects the magnetic layer (44), which is structured in the form of a pattern, to the first film body (51, 61), wherein the magnetic layer (44) is semi-transparent and/or the first film body (51, 61) is transparent to radiation and wherein the magnetic layer (44) forms magnetically detectable regions of varying size with line thicknesses in the range of 0.3 mm to 10 mm.

18. Security element according to Claim 17, **characterized in that** the magnetic layer is formed from magnetic nanoparticles.

19. Security element according to Claim 18, **characterized in that** the magnetic layer is formed from magnetic nanoparticles of iron oxide.

20. Security element according to one of Claims 17 to 19, **characterized in that** the magnetic layer (44) is formed from amorphous metal glass.

21. Security element according to one of Claims 17 to 20, **characterized in that** the first film body (51, 61) has a metal layer.

22. Security element according to Claim 21, **characterized in that** the first film body (51, 61) has a partial metal layer.

23. Security element according to Claim 21 or 22, **characterized in that** the first film body (51, 61) is designed such that it is metallized with aluminium.

24. Security element according to one of Claims 20 or 23, **characterized in that** a diffractive structure is formed into the metal layer.

25. Security element according to one of Claims 23 or 24, **characterized in that** the first film body is partially metallized with aluminium and the adhesive layer and the magnetic layer are applied onto the partially metallized aluminium layer in register with respect to the regions which are partially metallized with aluminium.

26. Security element according to one of Claims 17 to 25, **characterized in that** the adhesive layer (11p, 11s, 11v) is structured in the form of a pattern from a radiation-crosslinkable adhesive in the same manner as the magnetic layer (44), which is structured in the form of a pattern.

27. Security element according to one of Claims 17 to 26, **characterized in that** the adhesive layer (11p, 11s, 11v) is designed as an adhesive which cures under UV light.

28. Security element according to one of Claims 17 to 27, **characterized in that** the adhesive layer (11p, 11s, 11v) is designed as a non-conducting layer for preventing a local element formation between the magnetic layer (44) and the metal layer of the first film body (51, 61).

## Revendications

1. Procédé de fabrication d'un élément de sécurité pour des documents de valeur tels que des billets de banque, des cartes de crédit, des cartes d'identité ou des billets, comprenant un second corps de film présentant un revêtement magnétique partiel, sur un premier corps de film (51, 61) étant appliquée une couche (11p, 11s, 11v) d'une colle pouvant être réticulée sous l'effet des rayonnements, la couche (11p, 11s, 11v) de colle pouvant être réticulée sous l'effet des rayonnements étant structurée comme le modèle en durcissant en ce que la colle de couche (11p, 11s, 11v) est appliquée et irradiée dans un moule structuré comme premier modèle sur le premier corps de film (51, 61), l'irradiation étant effectuée après l'application d'un film de transfert (41) sur la couche de colle (11p. 11s, 11v), le film de transfert (41) qui présente un film de support (42) et une couche magnétique (44), la couche magnétique (44) étant orientée par rapport la couche de colle (11p, 11s, 11v), étant appliqué sur la couche de colle (11p, 11s, 11v) et en ce que le film de support (42) est tiré du second corps de film comprenant le premier corps de film (51, 61), la couche de colle (11p, 11s, 11v) et des zones de la couche magnétique (44) comme revêtement magnétique partiel, la couche magnétique (44) restant dans une première zone structurée comme le modèle sur le premier corps de film (51, 61) et la couche magnétique (44) restant dans une seconde zone structurée comme le modèle sur le film de support (42) et étant tirée du premier corps de film (51, 61) avec le film de support (42).

2. Procédé selon la revendication 1,
**caractérisé en ce**
**que** la couche (11p, 11s, 11v) d'une colle pouvant être réticulée sous l'effet des rayonnements est appliquée de manière structurée comme le modèle sur le premier corps de film (51, 61) par un procédé d'impression, en ce que le film de transfert (41) est appliqué sur la couche de colle (11p, 11s, 11v) structurée comme le modèle, en ce que la couche de colle (11p, 11s, 11v) est durcie par irradiation et en ce que le film de support (42) est tiré du second corps de film comportant le premier corps de film (51, 61), la couche de colle (11p, 11s, 11v) et des zones de la couche magnétique (44), la couche magnétique (44) restant dans la première zone revêtue comme le modèle avec la colle pouvant être réticulée sous l'effet des rayonnements (11p, 11s, 11v) sur le premier corps de film (51, 61) et étant tiré dans la seconde zone restante avec le film de support (42).

3. Procédé selon l'une quelconque des revendications précédentes,
**caractérisé en ce**
**que** la couche magnétique (44) est réalisée comme une couche de nanoparticules magnétiques.

4. Procédé selon la revendication 3,
**caractérisé en ce**
**que** la couche magnétique (44) est réalisée comme une couche de nanoparticules magnétiques d'oxyde ferrique.

5. Procédé selon la revendication 3 ou 4,
**caractérisé en ce**
**que** la couche de nanoparticules est appliquée sous forme de dépôt d'une solution sur le film de support (42).

6. Procédé selon la revendication 3 ou 4,
**caractérisé en ce**
**que** la couche magnétique est appliquée par pulvérisation cathodique sur le film de support (42).

7. Procédé selon l'une quelconque des revendications précédentes,
**caractérisé en ce**
**que** la couche magnétique (44) est constituée d'un métal lustré amorphe.

8. Procédé selon la revendication 6,
**caractérisé en ce**
**que** le métal lustré amorphe est constitué de fer et/ou de cobalt et/ou de chrome et/ou de nickel et/ou de silicium et/ou de bore.

9. Procédé selon la revendication 8,
**caractérisé en ce**
**que** le métal lustré amorphe est appliqué par pulvérisation cathodique sur le film de support (42).

10. Procédé selon l'une quelconque des revendications précédentes,
**caractérisé en ce**
**que** la couche magnétique (44) est réalisée semi-transparente, en ce que la couche de support (42) est réalisée transparente au rayonnement et en ce que la couche de colle (11p, 11s, 11v) des côtés du film de transfert (41) est irradiée par le film de transfert (41).

11. Procédé selon l'une quelconque des revendications précédentes,
**caractérisé en ce**
**que** le premier corps de film (51, 61) est réalisé transparent au rayonnement et la couche de colle (11p, 11s, 11v) des côtés du premier corps de film (51, 61) est irradiée par le premier corps de film (51, 61).

12. Procédé selon l'une quelconque des revendications précédentes,
**caractérisé en ce**
**qu'**une colle pouvant être réticulée sous l'effet des rayonnements est utilisée, laquelle possède à l'état non durci une force d'adhésion moindre par rapport à la couche magnétique que la force d'adhésion entre la couche magnétique (44) et le film de support (42).

13. Procédé selon l'une quelconque des revendications précédentes,
**caractérisé en ce**
**que** la couche de colle (11p, 11s, 11v) est constituée d'une colle non électroconductrice.

14. Procédé selon l'une quelconque des revendications précédentes,
**caractérisé en ce**
**que** la coche de colle (11p, 11s, 11v) est imprimée par héliogravure sur le premier corps de film (51, 61).

15. Procédé selon l'une quelconque des revendications précédentes,
**caractérisé en ce**
**que** la couche de colle (11p, 11s, 11v) est imprimée par impression offset ou flexographique sur le premier corps de film (51, 61).

16. Procédé selon l'une quelconque des revendications précédentes,
**caractérisé en ce**
**qu'**un film de transfert (41) est utilisé, lequel présente une couche détachable (43) entre le film de support (42) et la couche magnétique (44).

17. Elément de sécurité, en particulier fil de sécurité avec au moins une couche magnétique (44),
l'élément de sécurité présentant une couche (11p, 11s, 11v) d'une colle pouvant être réticulée sous l'effet des rayonnements et la couche de colle (11p, 11s, 11v) étant disposée entre une couche magnétique (44) structurée comme le modèle et un premier corps de film (51, 61) de l'élément de sécurité et reliant la couche (44) magnétique structurée comme le modèle au premier corps de film (51, 61), la couche magnétique (44) étant semi-transparente et/ou le premier corps de film (51, 61) étant transparent au rayonnement et la couche magnétique (44) réalisant des zones détectables magnétiques de différente grandeur avec des épaisseurs de traits comprises entre 0,3 et 10 mm.

18. Elément de sécurité selon la revendication 17,
**caractérisé en ce**
**que** la couche magnétique est réalisée en nanoparticules magnétiques.

19. Elément de sécurité selon la revendication 18,
**caractérisé en ce**
**que** la couche magnétique est réalisée en nanoparticules magnétiques d'oxyde ferrique.

20. Elément de sécurité selon l'une quelconque des revendications 17 à 19,
**caractérisé en ce**
**que** la couche magnétique (44) est réalisée en métal lustré amorphe.

21. Elément de sécurité selon l'une quelconque des revendications 17 à 20,
**caractérisé en ce**
**que** le premier corps de film (51, 61) présente une couche métallique.

22. Elément de sécurité selon la revendication 21,
**caractérisé en ce**
**que** le premier corps de film (51, 61) présente une couche métallique partielle.

23. Elément de sécurité selon la revendication 21 ou 22,
**caractérisé en ce**
**que** le premier corps de film (51, 61) est réalisé métallisé en aluminium.

24. Elément de sécurité selon l'une quelconque des revendications 20 ou 23,
**caractérisé en ce**
**qu'**une structure diffractive est formée dans la couche métallique.

25. Elément de sécurité selon l'une quelconque des revendications 23 ou 24,
**caractérisé en ce**
**que** le premier corps de film est partiellement métallisé en aluminium et la couche de colle et la couche magnétique sont appliquées en repérage par rapport aux zones partiellement métallisées en aluminium sur la couche d'aluminium partiellement métallisée.

26. Elément de sécurité selon l'une quelconque des revendications 17 à 25,
**caractérisé en ce**
**que** la couche (11p, 11s, 11v) d'une colle pouvant être réticulée sous l'effet des rayonnements est structurée comme le modèle de la même manière que la couche magnétique (44) structurée comme le modèle.

27. Elément de sécurité selon l'une quelconque des revendications 17 à 26,
**caractérisé en ce**
**que** la couche de colle (11p, 11s, 11v) est réalisée comme une colle durcissant sous la lumière ultraviolette.

28. Elément de sécurité selon l'une quelconque des revendications 17 à 27,
**caractérisé en ce**
**que** la couche de colle (11p, 11s, 11v) est réalisée comme une couche non conductrice pour empêcher une réalisation de pile locale entre la couche magnétique (44) et la couche métallique du premier corps de film (51, 61).
